# EUROPÄISCHE PATENTSCHRIFT

(11) **EP 1 397 594 B1**
(45) Veröffentlichungstag und Bekanntmachung des Hinweises auf die Patenterteilung: **01.10.2014**
(21) Anmeldenummer: 02750985.0
(22) Anmeldetag: 29.05.2002
(51) Int. Cl.: F03D 7/02, H02K 16/00, H02K 7/106

(54) **WINDENERGIEANLAGE MIT EINER ASYNCHRONMASCHINE ZUR FESTSTELLUNG DER AZIMUTPOSITION**
WIND ENERGY PLANT WITH AN ASYNCHRONOUS MACHINE FOR DETERMINING THE AZIMUTH POSITION
INSTALLATION D'ENERGIE EOLIENNE DOTEE D'UNE MACHINE ASYNCHRONE DESTINEE A LA DETERMINATION DE LA POSITION AZIMUTALE

(30) Priorität: 02.06.2001 DE 10127102
(43) Veröffentlichungstag der Anmeldung: 17.03.2004
(73) Patentinhaber: Wobben Properties GmbH, 26605 Aurich (DE)
(72) Erfinder: Wobben, Aloys, 26607 Aurich (DE)
(74) Vertreter: Eisenführ Speiser
(86) Internationale Anmeldenummer: PCT/EP2002/005888
(87) Internationale Veröffentlichungsnummer: WO 2002/099276

(56) Entgegenhaltungen:
- EP-A- 0 945 613
- DE-A- 19 645 581
- DE-A- 19 920 504
- US-A- 3 235 758
- US-A1- 2006 006 744

## Beschreibung

Die vorliegende Erfindung betrifft eine Windenergieanlage mit einer Asynchronmaschine zur Feststellung der Azimutposition des Maschinenhauses der Windenergieanlage, wobei die Asynchronmaschine mit einer ersten Läufer/Ständer-Anordnung ausgestattet ist, bei welcher der Läufer mit einer Welle direkt verbunden ist.

Asynchronmaschinen sind seit langer Zeit allgemein bekannt, z.B. aus WO 98/40958, DE 32 34 673, WO 90/13937, US 5,838,135 und werden für vielfältige Antriebs- bzw. Stell-Aufgaben verwendet. Eine Stell-Aufgabe ist dabei häufig das Verfahren eines Maschinenteiles von einer Ausgangsposition in eine vorgebbare, neue Zielposition.

Ein beispielhafter Anwendungsfall ist das Verstellen der Azimutposition bei Windenergieanlagen. Durch dieses Verstellen der Azimutposition, nämlich der Ausrichtung der Gondel bei Horizontalachsen-Anlagen, kann der Rotor dem Wind nachgeführt werden, um somit stetig elektrische Energie erzeugen zu können.

Zur Verwirklichung dieser Windrichtungs-Nachführung ist die Gondel einer solchen Windenergieanlage drehbar gelagert und wird über wenigstens einen sogenannten Azimutmotor verfahren. Dieses Verfahren erfolgt, indem zum Beispiel ein Antriebs-Zahnritzel in eine Verzahnung am Turmkopf eingreift und die Gondel durch Betätigen des Motors gegenüber dem Turmkopf verstellt. Ist die gewünschte Azimutposition erreicht, wird die Asynchronmaschine angehalten.

Die DE 199 20 504 A1 zeigt einen Azimutantrieb für Windenergieanlagen mit vier Drehstrom-Asynchron-Motoren, die jeweils eine Läufer/Ständer-Anordnung aufweisen, die elektrisch voneinander getrennt sind. Der jeweilige Läufer jedes der vier Drehstrom-Asynchron-Motoren wirkt über jeweils eine eigene Welle unabhängig voneinander auf einen am Turmkopf angeordneten Zahnkranz. Ein weiterer Azimutantrieb für Windenergieanlagen in der vorstehend beschriebenen Art ist aus der EP 0 945 613 A2 bekannt.

Allerdings wird nicht bei jeder beliebig geringen Abweichung in der Windrichtung die Azimutposition verändert. Dadurch kommt es bei geringen Windrichtungsänderungen zu einer Schräganströmung des Rotors und einem sich daraus ergebenden Giermoment um die Hochachse der Windenergieanlage an der Gondel. Damit dieses Giermoment nicht zu einer ungewollten Veränderung der Azimutposition führt, können die Azimutmotoren mit einem Gleichstrom beaufschlagt werden, um ein entsprechendes Bremsmoment zu erzeugen.

Probleme ergeben sich jedoch immer noch durch die verwendeten mechanischen Komponenten. Selbst bei größter Genauigkeit und Sorgfalt lässt sich ein Spiel zwischen dem Zahnkranz am Turmkopf und den Antriebsritzeln nicht vermeiden. Bei auftretenden wechselnden Giermomenten führt dies zu einer entsprechenden Bewegung der Gondel innerhalb des Bereiches, den dieses Spiel zulässt.

Die Probleme liegen dabei weniger im Bereich der geringfügigen Abweichung von der idealen Azimutposition, sondern vielmehr in der zusätzlichen mechanischen Beanspruchung der Komponenten, die wiederum zu einer Verkürzung der Lebensdauer führt.

Aufgabe der vorliegenden Erfindung ist es daher, einen Antrieb für die Feststellung des Maschinenhauses einer Windenergieanlage anzugeben, wobei der Antrieb eine Aufhebung des Spiels der mechanischen Komponenten in der vorgegebenen Zielposition erlaubt, ohne dass es zu einer gegenseitigen Beeinflussung zwischen dem erwünschten Bremsmoment und der Beseitigung des Spieles kommt.

Weiterhin ist eine Aufgabe der vorliegenden Erfindung, ein geeignetes Verfahren zur Steuerung eines erfindungsgemäßen Antriebes bereitzustellen.

Diese Aufgabe wird erfindungsgemäß mit einer Windenergieanlage mit den Merkmalen nach Anspruch 1 gelöst. Vorteilhafte Weiterbildungen sind in den Unteransprüchen beschrieben.

Erfindungsgemäß weist die eingangs beschriebene Asynchronmaschine eine zweite Läufer/Ständer-Anordnung auf, welche jedoch von der ersten Läufer/Ständer-Anordnung elektrisch getrennt ist, wobei der Läufer der zweiten Läufer/Ständer-Anordnung ebenfalls mit der Welle direkt verbunden ist. Dadurch kann eine Läufer/Ständer-Anordnung mit einem Gleichstrom in der gewünschten Richtung beaufschlagt werden, um ein gewünschtes Bremsmoment zu erzeugen, während die zweite Läufer/Ständer-Anordnung mit einem Wechselstrom beaufschlagt wird, der ein Drehmoment in Richtung des umlaufenden Drehfeldes erzeugt und somit eine Betätigung des Antriebs bewirkt.

Verwendet man nun zwei erfindungsgemäße Antriebe, die in entgegengesetzten Richtungen wirken, kann durch die entgegensetzte Richtung des Drehmoments jeder der Antriebe so eingestellt werden, dass er den Bereich des mechanischen Spiels überwindet. Dadurch das mechanische Spiel beseitigt.

Unabhängig davon bleibt das Bremsmoment erhalten, da die Ströme jeweils unterschiedliche Läufer/Ständer-Anordnungen beaufschlagen und sich in ihrer elektrischen Wirkung nicht überlagern. Mechanisch findet eine Überlagerung auf der Welle statt, da beide Läufer mit dieser Welle verbunden sind.

In einer bevorzugten Weiterbildung der Erfindung werden beim Verstellen eines Maschinenteils beide Läufer/Ständer-Anordnungen des Antriebes phasengleich mit einem ersten Wechselstrom beaufschlagt. Dadurch addieren sich die in den einzelnen Läufer/Ständer-Anordnungen ergebenden Momente zu einem höheren Gesamtmoment.

Vorteilhafte Ausführungsformen sind in den Unteransprüchen angegeben. Nachfolgend wird die Erfindung anhand der Figuren näher erläutert. Dabei zeigen:
- Fig. 1: eine teilweise geschnittene Ansicht eines erfindungsgemäßen Antriebes;
- Fig. 2: eine alternative Ausführungsform eines erfindungsgemäßen Antriebes;
- Fig. 3: eine schematische Anordnung von vier Azimutantrieben einer Verstelleinrichtung am Maschinenhaus.

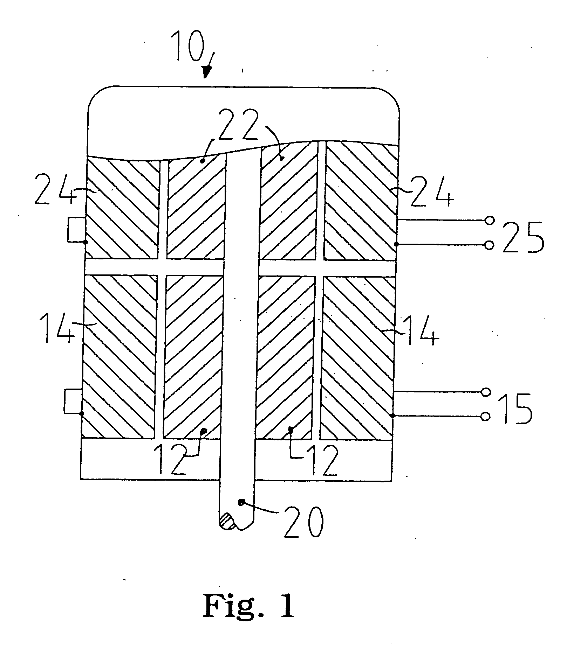

In Figur 1 bezeichnet das Bezugszeichen 10 einen erfindungsgemäßen Antriebsmotor. Dieser Antriebsmotor weist einen ersten Läufer 12 auf, der mit der Welle 20 verbunden ist, und einen ersten Ständer 14, der mit dem ersten Läufer 12 zusammenwirkt. Weiterhin weist der erfindungsgemäße Antrieb 10 einen zweiten Läufer 22 auf, der ebenfalls mit der Welle 20 verbunden ist, und mit dem Ständer 24 zusammenwirkt.

Die beiden Läufer/Ständer-Anordnungen 12, 14; 22, 24 sind in diesem Ausführungsbeispiel in einem Gehäuse zusammengefasst, jedoch elektrisch voneinander getrennt. Dies ist durch die jeweils separat dargestellten Anschlussklemmen 15, 25 dargestellt.

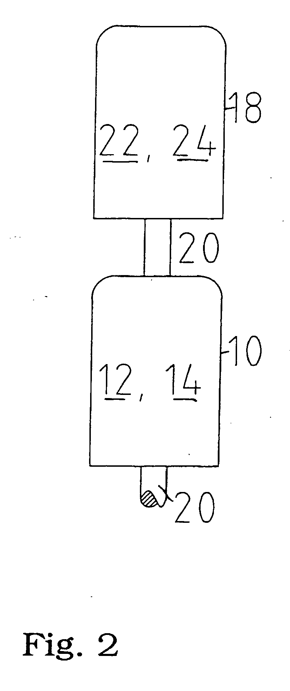

Figur 2 zeigt eine weitere Ausführungsform der vorliegenden Erfindung. In dieser Ausführungsform sind die Läufer/Ständer-Anordnungen 12, 14; 22, 24 jeweils in einem eigenen Gehäuse 10, 18 untergebracht. Beide wirken jedoch, wie in dem in Figur 1 gezeigten Ausführungsbeispiel, auf die gleiche Welle 20, welche das Gehäuse 10 der ersten Läufer/Ständer-Anordnung 12, 14 durchläuft und bis in das Gehäuse 18 der zweiten Läufer/Ständer-Anordnung 22, 24 hineingreift und mit den beiden Läufern 12, 22 verbunden ist.

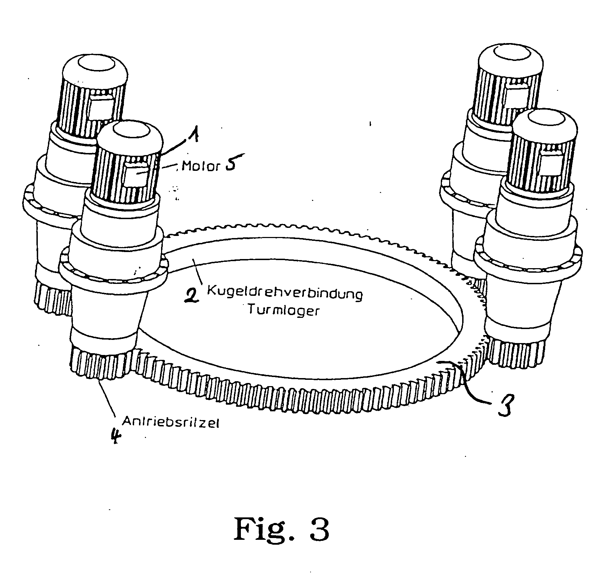

Fig. 3 zeigt eine schematische Anordnung von vier Azimutantrieben einer Verstelleinrichtung am Maschinenhaus einer Windenergieanlage. Windenergieanlagen haben in der Regel für die Windrichtungsnachführung einen aktiven Antrieb. Dieser verdreht den Maschinenkopf (Maschinenhaus) der Windenergieanlage so, dass die Rotorblätter des Rotors in Richtung des Windes optimal ausgerichtet sind. Der aktive Antrieb für die Windrichtungsnachführung ist ein Azimutantrieb 1 mit dem dazugehörigen Azimutlager 2 und befindet sich in der Regel zwischen dem Turmkopf und dem Maschinenhaus der Windenergieanlage. Bei kleinen Windenergieanlagen genügt ein einziger Azimutantrieb, größere Windenergieanlagen sind in der Regel mit mehreren Antrieben, z.B. vier Antrieben, wie in Fig. 3 dargestellt, ausgerüstet. Die vier Antriebe 1 sind gleichmäßig über dem Umfang des Turmkopfes 3 verteilt (auch eine ungleichmäßige Verteilung ist möglich).

Als Azimutantriebe werden vorliegend Asynchronmotoren verwendet, wie sie bereits vorstehend beschrieben sind, wobei die Welle 20 (Fig. 1) direkt auf das Antriebsritzel 4 wirkt.

## Patentansprüche

1. Windenergieanlage mit einem Rotor und einem Generator sowie einem Maschinenhaus, welches den Generator aufnimmt, wobei zur Verstellung des Maschinenhauses ein Azimutantrieb vorgesehen ist,
**dadurch gekennzeichnet, dass** der Azimutantrieb durch eine Asynchronmaschine gebildet ist und eine erste Läufer/Ständer-Anordnung aufweist, dass der Läufer mit einer Welle direkt verbunden ist, und dass wenigstens eine zweite Läufer/Ständer-Anordnung (22, 24) ausgebildet ist, welche von der ersten Läufer/Ständer-Anordnung (12, 14) elektrisch getrennt ist, wobei der Läufer (22) der zweiten Läufer/Ständer-Anordnung (22, 24) ebenfalls mit der Welle (20) direkt verbunden ist, wobei die erste Läufer/Ständer-Anordnung dazu vorbereitet ist, mit einem Gleichstrom beaufschlagt zu werden.

2. Windenergieanlage nach Anspruch 1,
**gekennzeichnet durch** eine räumliche Trennung zwischen der ersten Läufer/Ständer-Anordnung (12, 14) und der zweiten Läufer/Ständer-Anordnung (22, 24).

3. Windenergieanlage nach einem der vorstehenden Ansprüche,
**gekennzeichnet durch** ein gemeinsames Gehäuse für die erste Läufer/Ständer-Anordnung (12, 14) und die zweite Läufer/Ständer-Anordnung (22, 24).

4. Windenergieanlage nach einem der Ansprüche 1 oder 2,
**gekennzeichnet durch** ein Gehäuse für jede der Läufer/Ständer-Anordnungen (12, 14; 22, 24).

5. Verfahren zur Steuerung einer Asynchronmaschine nach einem der vorstehenden Ansprüche,
**dadurch gekennzeichnet, dass** eine Läufer(Ständer-Anordnung (12, 14; 22, 24) mit einem Wechselstrom beaufschlagt wird und die andere Läufer/Ständer-Anordnung (22, 24; 12,14) mit einem Gleichstrom beaufschlagt wird.

6. Windenergieanlage nach Anspruch 1,
**dadurch gekennzeichnet, dass** als Antrieb für die Azimutverstellung wenigstens zwei Asynchronmaschinen nach einem der vorhergehenden Ansprüche ausgebildet sind,

7. Verwendung einer Asynchronmaschine nach einem der vorhergehenden Ansprüche als Einrichtung zur Verstellung der Azimutposition einer Gondel einer Windenergieanlage.

## Claims

1. Wind turbine having a rotor and a generator and a machine housing which receives the generator, an azimuth drive being provided in order to adjust the machine housing,
**characterised in that** the azimuth drive is formed by an asynchronous machine and has a first armature/stator arrangement, **in that** the armature is connected directly to a shaft, and **in that** there is formed at least a second armature/stator arrangement (22, 24) which is electrically separated from the first armature/stator arrangement (12, 14), the armature (22) of the second armature/stator arrangement (22, 24) also being directly connected to the shaft (20), the first armature/stator arrangement being provided to be acted on with a direct current.

2. Wind turbine according to claim 1,
**characterised by** a spatial separation between the first armature/stator arrangement (12, 14) and the second armature/stator arrangement (22, 24).

3. Wind turbine according to either of the preceding claims,
**characterised by** a common housing for the first armature/stator arrangement (12, 14) and the second armature/stator arrangement (22, 24).

4. Wind turbine according to either claim 1 or claim 2,
**characterised by** a housing for each of the armature/stator arrangements (12, 14; 22, 24).

5. Method for controlling an asynchronous machine according to any one of the preceding claims,
**characterised in that** one armature/stator arrangement (12, 14; 22, 24) is acted on with an alternating current and the other armature/stator arrangement (22, 24; 12, 14) is acted on with a direct current.

6. Wind turbine according to claim 1,
**characterised in that**, as a drive for the azimuth adjustment, at least two asynchronous machines are formed in accordance with any one of the preceding claims.

7. Use of an asynchronous machine according to any one of the preceding claims as a device for adjusting the azimuth position of a pod of a wind turbine.

## Revendications

1. Éolienne comprenant un rotor et un générateur ainsi qu'une salle des machines qui réçoit le générateur, un entraînement azimutal étant prévu pour ajuster la salle des machines,
**caractérisée en ce que** l'entraînement azimutal est formé par une machine asynchrone et présente un premier système rotor / stator, **en ce que** le rotor est relié directement à un arbre, et **en ce qu'**au moins un deuxième système rotor / stator (22, 24) est réalisé, lequel est séparé électriquement du premier système rotor / stator (12, 14), le rotor (22) du deuxième système rotor / stator (22, 24) étant également relié directement à l'arbre (20), le premier système rotor / stator étant préparé pour être soumis à un courant continu.

2. Éolienne selon la revendication 1,
**caractérisée par** une séparation spatiale entre le premier système rotor / stator (12, 14) et le deuxième système rotor / stator (22, 24).

3. Éolienne selon l'une quelconque des revendications précédentes,
**caractérisée par** un logement commun pour le premier système rotor / stator (12, 14) et le deuxième système rotor / stator (22, 24).

4. Éolienne selon l'une quelconque des revendications 1 ou 2, **caractérisée par** un logement pour chacun des systèmes rotor / stator (12, 14 ; 22, 24).

5. Procédé de commande d'une machine asynchrone selon l'une quelconque des revendications précédentes,
**caractérisé en ce qu'**un système rotor / stator (12, 14 ; 22, 24) est soumis à un courant alternatif et l'autre système rotor / stator (22, 24; 12, 14) est soumis à un courant continu.

6. Éolienne selon la revendication 1,
**caractérisée en ce qu'**au moins deux machines asynchrones selon l'une quelconque des revendications précédentes sont conçues comme entraînement pour l'ajustement azimutal.

7. Utilisation d'une machine asynchrone selon l'une quelconque des revendications précédentes comme dispositif pour ajuster la position azimutale d'une nacelle d'une éolienne.
